# EUROPÄISCHE PATENTSCHRIFT

(11) **EP 1 624 186 B1**
(45) Veröffentlichungstag und Bekanntmachung des Hinweises auf die Patenterteilung: **25.02.2015**
(21) Anmeldenummer: 05015960.7
(22) Anmeldetag: 22.07.2005
(51) Int. Cl.: F03D 11/00, F03D 1/00

(54) **Rettungskapsel für Windenergieanlagen**
Rescue capsule for wind energy plants
Capsule de sauvetage pour des installations d'énergie éolienne

(30) Priorität: 02.08.2004 DE 102004037458
(43) Veröffentlichungstag der Anmeldung: 08.02.2006
(73) Patentinhaber: Senvion SE, 22297 Hamburg (DE)
(72) Erfinder: Friebe, Patrick, 25524 Itzehoe (DE); Rauschelbach, Andreas, 25764 Friedrichsgabekoog (DE)
(74) Vertreter: Groth, Wieland

(56) Entgegenhaltungen:
- WO-A1-03/069155
- GB-A- 2 268 711
- NL-A- 7 509 084
- US-A- 5 127 491
- US-A1- 2003 057 023

## Beschreibung

Die Erfindung betrifft eine Windenergieanlage für den off-shore Einsatz.

Windenergieanlagen zur Erzeugung von Strom finden zunehmend Verbreitung. Die Anlagen weisen einen Turm auf, an dessen oberem Ende ein Maschinenhaus angeordnet ist, das einen Generator und bei bestimmten Anlagen ein Getriebe aufnimmt. Bei Defekten der Anlagen und Wartungsarbeiten an dem Generator oder dem Getriebe muss das Servicepersonal durch den Turm in das Maschinenhaus steigen. Das ist kraft- und zeitaufwendig.

Darüber hinaus sind im Maschinenhaus oder im Turm der Windenergieanlage Transformatoren untergebracht. Gerade bei Reparaturarbeiten können durch Defekt an den Transformatoren Brände verursacht werden. Im Brandfall ist das Servicepersonal dann möglicherweise im Maschinenhaus eingeschlossen. Somit besteht das Problem, das Servicepersonal im Brandfall, z.B. aus dem Maschinenhaus heraus, in Sicherheit zu bringen. Eine Rettung mittels Helikopter dauert hier meist zu lange und außerdem ist der Anflug des Helikopters zum Dach des Maschinenhauses im Brandfall gefährlich.

Im on-shore Einsatz sind Windenergieanlagen bekannt, in deren Maschinenhaus eine Ausstiegsluke bodenseitig angebracht ist. Aus Sicherheitsgründen arbeitet das Servicepersonal im Maschinenhaus mit einem umgeschnallten Gurt. Im Brandfall ist das Servicepersonal angehalten, ein Ende eines Sprungseils im Gurt einzuhaken. Das angeseilte Servicepersonal springt danach durch die geöffnete Luke und wird durch das sich von einer Rolle gebremst abwickelnde Sprungseil sicher zum Boden abgeseilt. Derartige Rettungssysteme eignen sich nicht für den off-shore Einsatz, weil ein Abseilen des Servicepersonals in das Meer geltenden Sicherheitsbestimmungen nicht genügt. Insbesondere im Winter wäre das Abseilen ins Meer mit der Gefahr lebensgefährlicher Unterkühlungen verbunden. Zwar wäre die Durchführung von Wartungs- und Reparaturarbeiten bei dem beschriebenen Rettungssystem in Überlebensanzügen gestattet, jedoch bei den üblicherweise im Maschinenhaus herrschenden Raumtemperaturen von bis zu 50°C sehr beschwerlich.

Rettungskonzepte für auf See befindliche Objekte sind bekannt. In der DE 202 02 214 U1 ist eine Rettungsvorrichtung für Personen auf einem Schiff offenbart. Dort ist ein integraler Bestandteil des Schiffs als Rettungsvorrichtung ausgebildet, der im Gefahrenfall aus dem Schiffsrumpf ausgeklinkt werden kann.

Die DE 42 05 946 A1 offenbart eine Rettungsinsel für Bohrplattformen. Dabei ist eine am Meeresgrund angeordnete Rettungsinsel vorgesehen, die im Gefahrenfall an die Wasseroberfläche aufsteigt und dort aufblasbar ist. Aus der DE 250 0975 A1 ist eine ständig mit Personal besetzte Ölplattform mit einer Rettungskapsel bekannt.

Aus der DE 102 22 472 A1 ist eine Windenergieanlage bekannt, die über eine entlang einer Schiene verfahrbare, einklinkbare Kabine oder ganzes Schiff versorgbar ist.

In der WO 03069155 A1 ist ein Offshore Windpark offenbart, dessen einzelne Windkraftanlagen mittels einer Seilverbindung untereinander verbunden sind. Entlang der Seilverbindungen ist eine Gondel hin und her verfahrbar.

Die genannten Konzepte eignen sich nicht zur Rettung von Servicepersonal aus Windenergieanlagen.

Es ist Aufgabe der vorliegenden Erfindung, eine Windenergieanlage mit einem einfachen und kostengünstigen Rettungssystem und ein Verfahren zur Rettung von Servicepersonal aus einer Windenergieanlage zur Verfügung zu stellen.

Die Aufgabe wird durch eine eingangs genannte Windenergieanlage gelöst, die die Merkmale des Anspruchs 1 aufweist.

Auf der Betriebsmittelplattform können zu wartende oder zu reparierende Einrichtungen, wie der Generator, Getriebe oder Transformatoren untergebracht sein. Die Betriebsmittelplattform ist hier als ein umfassender Begriff zu verstehen, der u.a. eine im Bodenabschnitt des Turms angeordnete Containerplattform, im mittleren Abschnitt des Turms angeordnete Turmplattformen und ein im Turmkopf angeordnetes Maschinenhaus und auch die zur Wartung zugängliche Rotornabe mit umfasst. Die Windenergieanlage ist zu Wartungszwecken von Servicepersonal begehbar.

Das Servicepersonal wird mit einen Beförderungsmittel, insbesondere einem Schiff oder einem Helikopter zur off-shore Windenergieanlage befördert. Die Windenergieanlage weist in einer bevorzugten Ausführungsform einen verschließbaren Wartungszugang für das heran beförderte Servicepersonal auf. Das ist beispielsweise eine Turmtür am meeresbodenseitigen Ende des Turms, insbesondere für mit einem Versorgungsschiff befördertes Servicepersonal. Das Servicepersonal gelangt durch Öffnen des Wartungszugangs in einen Innenraum des Turms der Windenergieanlage. Der Wartungszugang kann in einer anderen Ausführungsform der Erfindung ein Mannloch am Dach des Maschinenhauses am oberen Ende des Turmes für durch einen auf einer Landefläche am Maschinenhaus landenden Helikopter befördertes Servicepersonal sein. Das Maschinenhaus kann bis zu 100 Metern oberhalb der Meeresoberfläche vorgesehen sein.

Das Rettungsmittel ist vor dem Gefahrenfall, auch wenn kein Servicepersonal bei der Windenergieanlage ist, in Verbindung mit der Windenergieanlage. Das ist auch der Normalzustand der Windenergieanlage. Das Rettungsmittel ist im Normalzustand bei der Windenergieanlage positioniert, insbesondere an ihr angeordnet. Es ist im Wesentlichen ständig mit der Windenergieanlage verbunden. Das Rettungsmittel wird vor dem Gefahrenfall allenfalls, um beispielsweise selber gewartet oder ausgetauscht zu werden, von der Windenergieanlage entfernt. Im Gefahrenfall ist das Rettungsmittel zum Transport des sich auf der Betriebsmittelplattform aufhaltenden Servicepersonals zur Meeresoberfläche bestimmt.

Es liegt vorzugsweise eine mechanische Verbindung zwischen Windenergieanlage und Rettungsmittel durch Seile Aufhängungen, Führungsschienen o. Ä. vor. Das Rettungsmittel ist bis zum Gefahrenfall durch die mechanische Verbindung ständiger Bestandteil der Windenergieanlage. Es kommt im Gefahrenfall zum Einsatz. Dann ist es zum Transport und vorzugsweise zur Aufnahme des Servicepersonals bestimmt, wenn sich solches gerade zu Wartungszwecken in der Windenergieanlage aufhält.

Das Beförderungsmittel und das Rettungsmittel sind günstigenfalls voneinander getrennt. Das Beförderungsmittel ist im Rahmen des erfindungsgemäßen Rettungssystems nicht zur Rettung des Servicepersonals im Gefahrenfall bestimmt. Ebenso sind vorzugsweise der Wartungszugang und die direkte Verbindung zwischen Innenraum der Betriebsmittelplattform und Rettungsmittel voneinander getrennt.

Im Gefahrenfall kann das Servicepersonal direkt von der Betriebsmittelplattform gerettet werden, zu der es vorher ggf. aus anderen Bereichen der Windenergieanlage flüchtet. Das Rettungsmittel ist dazu günstigenfalls an der Betriebsmittelplattform angeordnet. Das Servicepersonal braucht nicht zu einem von der Betriebsmittelplattform beabstandeten Wartungszugang flüchten. Das erfindungsgemäße Rettungskonzept eignet sich insbesondere zur Rettung des Servicepersonals direkt von der Betriebsmittelplattform, d. h. aus dem Gefahrenbereich, in dem sie sich das Servicepersonal zu Servicearbeiten aufhält und der besonders brandgefährdet ist.

Vorzugsweise ist eine direkte, den Umstieg des Servicepersonals gestattende Verbindung zwischen einem Innenraum der Betriebsmittelplattform und dem Rettungsmittel vorgesehen. Diese Verbindung kann als Übergang ausgebildet sein. Dadurch kann das Servicepersonal direkt aus dem Innenraum der Betriebsmittelplattform in das Rettungsmittel umsteigen. Die direkte Verbindung ist vorzugsweise zwischen dem Innenraum der Betriebsmittelplattform und einem Innenraum des Rettungsmittels vorgesehen.

Im Normalzustand hält sich kein Servicepersonal in der Windenergieanlage auf. Die Windenergieanlage ist normalerweise personenlos und nur zur Wartungsarbeiten durch Servicepersonal belegt. Der Gefahrenfall liegt vor, wenn sich Servicepersonal auf der Windenergieanlage aufhält und ein Gefahrentatbestand auftritt. Das kann insbesondere Feuer in der Windenergieanlage oder der unkontrollierte durchgehende Rotor der Windturbine sein.

Vorzugsweise ist das Servicepersonal in dem Rettungsmittel aufnehmbar, es kann einen Innenraum zur Aufnahme aufweisen. Bei dem Rettungsmittel kann es sich um unten beschriebene Rettungskapseln, Rettungskörbe oder Ähnliches handeln.

In einer bevorzugten Ausführungsform der Erfindung weist die Betriebsmittelplattform eine Ausstiegsöffnung für das Servicepersonal und das Rettungsmittel eine Einstiegsöffnung, vorzugsweise eine Rettungskapseltür, auf. Beide Öffnungen liegen einander gegenüber und bilden eine Ausführungsform der direkten Verbindung aus. Vorzugsweise sind die direkte Verbindung und der Wartungszugang voneinander getrennt. Sie können voneinander beabstandet sein.

Das Rettungsmittel ist vorzugsweise von brandgefährdeten oder elektrischen Einrichtungen im Wesentlichen befreit. Gegenüber dem Beförderungsmittel ist das Rettungsmittel somit nicht der Gefahr ausgesetzt, selbst in Brand zu geraten oder selbst Auslöser eines Brandes an der Windenergieanlage zu sein. Rettungsmittel und Beförderungsmittel sind nicht identisch.

Zum Transportieren des Rettungsmittels entlang des Turms kann eine Hinunterlassvorrichtung vorgesehen sein.

In einer Ausführungsform der Erfindung kann die Hinunterlassvorrichtung eine Schiene aufweisen, an der das Rettungsmittel zur Meeresoberfläche geführt wird. In einer anderen Ausführungsform weist sie wenigstens ein Seil auf, an dem das Rettungsmittel abseilbar ist.

Es ist auch denkbar, dass das Rettungsmittel einen Gleitschirm aufweist. Das Servicepersonal besteigt das Rettungsmittel, klinkt es an der Betriebsmittelplattform aus und schwebt in ihm zur Meeresoberfläche. Statt eines Gleitschirms ist auch ein Fallschirm oder Ähnliches verwendbar. Die Rettungseinrichtung ist in dieser Ausführungsform besonders kostengünstig.

In einer weiteren Ausführungsform der Erfindung ist das Rettungsmittel als Rettungstorpedo ausgebildet, der aus der Betriebsmittelplattform nach dem Besteigen durch das Servicepersonal ausgeklinkt werden kann, und der dann zur Meeresoberfläche fällt. Er ist vorzugsweise geschlossen und im Wesentlichen wasserdicht und stromlinienförmig, insbesondere lang gestreckt, ausgebildet. Die Stromlinienform des Rettungstorpedos erlaubt ein die Aufschlagkraft dämpfendes Eintauchen in das Meer. Es können weitere dämpfende Haltemittel, wie elastische Gurte oder Sitze für das Servicepersonal in dem Rettungstorpedo vorgesehen sein. Der Rettungstorpedo kann auch, beispielsweise durch ein mit dem Turm verbundenes Gummiseil, gedämpft fallen. Solche Rettungstorpedos sind bisher nur für eine Mehrzahl von Personen, als Rettungsmittel für die Besatzung von Bohrinseln bekannt.

Vorzugsweise ist das Rettungsmittel aber mittels einer Abseileinrichtung entlang des Turms zur Meeresoberfläche abseilbar. Das Servicepersonal wird so schnell aus der Gefahr gerettet. Das Rettungsmittel wird vorzugsweise durch wenigstens ein Seil im Wesentlichen senkrecht zur Meeresoberfläche, neben dem Turm, von einer Betriebsmittelplattform aus, abgeseilt. Dabei kann es durch einen den Turm umlaufenden Ring geführt werden, dessen Innendruchmesser wenigstens dem größten Turmdurchmesser entspricht. In einer weiteren Ausführungsform der Erfindung umläuft das Rettungsmittel den Turm. Es ist umlaufend begehbar und wird durch eine in der Betriebsmittelplattform angeordnete Luke bestiegen. Es wird vom Turm geführt abgeseilt.

Insbesondere das Abseilen neben dem Turm kann mit Hilfe verschiedener Vorrichtungen geschehen. In einer Variante wird das Seil heruntergelassen und das Servicepersonal klinkt sich nacheinander mit einer an dem Gurt vor dem Bauch des Servicepersonals angebrachten Bremsvorrichtung in das Seil ein und seilt sich in eine Rettungsinsel oder Ähnliches ab.

In einer bevorzugten Ausführungsform der Erfindung kann das eine Ende eines Seils mit der Betriebsmittelplattform verbunden sein, und ein anderes Ende des Seils kann an einer außerhalb des Rettungsmittels angeordneten Seilrolle befestigt sein, auf der ein Seilvorrat aufgerollt ist. Es können z.B. Nylonseile oder Stahlseile verwendet werden.

Die Seilrolle kann auch oberhalb der Betriebsmittelplattform, beispielsweise auf einem Galgen gelagert sein. Dabei ist das Rettungsmittel durch eine Bodenöffnung der Betriebsmittelplattform besteigbar.

Die Verwendung von Seilen macht die Abseileinrichtung wartungsarm und kostengünstig in der Anschaffung.

Die Abseileinrichtung kann eine Bremse aufweisen, mittels der die Abseilgeschwindigkeit des Rettungsmittels verringerbar ist. Die Bremse ist vorzugsweise an der Seilrolle angeordnet. Beispielsweise ist dazu die Abrollgeschwindigkeit des auf der Seilrolle aufgerollten Seils durch eine an der Seilrolle angeordnete Fliehkraftbremse steuerbar. Durch Minderung der Abseilgeschwindigkeit wird die Gefahr von Verletzungen beim Servicepersonal verringert. Insbesondere bei einer außerhalb des Rettungsmittels angeordneten Seilrolle kann eine vom Rettungsmittel aus bedienbare Steuereinrichtung, z.B. ein Steuergestänge oder einen Bowdenzug, vorgesehen sein, mit der die Abseilgeschwindigkeit gebremst oder das Rettungsmittel gestoppt werden kann.

Vorzugsweise wird das Rettungsmittel von der Betriebsmittelplattform aus bestiegen, an der das Rettungsmittel angeordnet ist. Danach wird das Rettungsmittel aus der Betriebsmittelplattform ausgeklinkt, um dann bemannt durch die Herablassvorrichtung zur Meeresoberfläche abzufahren. Es kann günstigerweise auch eine Steuereinrichtung für die Herablassvorrichtung an einer Turmtür vorgesehen sein. Sich bei der Turmtür aufhaltendes Servicepersonal kann das Rettungsmittel von einer oberen Betriebsmittelplattform, z.B. dem Maschinenhaus, unbemannt zur Meeresoberfläche herunterlassen und es erst dann, aus der Turmtür heraus, direkt besteigen. So wird eine Rettung des Servicepersonals ermöglicht, dem der sofortige Zustieg in das Rettungsmittel versperrt ist.

Es ist denkbar, eine herkömmliche, aufblasbare Rettungsinsel an dem Rettungsmittel anzuordnen. Die Rettungsinsel ist hier bei der Betriebsmittelplattform in aneinandergefügten Halbschalen gelagert. Sie wird im Bedarfsfall automatisch aufgeblasen. Die abgesprengten Halbschalen können durch Halteeinrichtungen am Herunterfallen gehindert werden. Die Rettungsinsel wird auf einer Bodenplatte herabgelassen oder Ihr Boden wird vor dem Einsteigen des Servicepersonals verstärkt, um das eingestiegene Servicepersonal beim Herablassen zu tragen. Rettungsinseln haben den Vorteil, Platz sparend lagerbar zu sein. Allerdings sind sie wartungsintensiv und die Aufblasvorrichtung kann im Gefahrenfall versagen. Darüber hinaus muss sie nach Erlangung der Ablegereife ersetzt werden. Um auf eine Bodenverstärkung verzichten zu können, ist es auch denkbar, die Rettungsinsel unbemannt abzuseilen. Das Servicepersonal wird dann separat in Überlebensanzügen abgeseilt, um die Rettungsinsel dann aus dem Meer heraus zu besteigen.

In einer weiteren, besonders sicheren Ausführungsform der Erfindung ist das Rettungsmittel als schwimmfähige Rettungskapsel ausgebildet. Die Rettungskapsel kann bei Brand umgehend bestiegen und herabgelassen werden. Rettungskapseln können vollständig abgeschlossen werden, und sie sind damit vom Wetter unabhängiger. Vorteilhafter Weise braucht das Servicepersonal keine Überlebensanzüge anlegen. Die Rettungskapsel kann Auftriebskörper und Fender aufweisen, die ihre Sicherheit zusätzlich erhöhen.

Insbesondere die Rettungskapsel kann, zur Ausbildung eines Faradayschen Käfigs, ein umlaufendes, elektrisch leitendes Material aufweisen und ein Erdungsseil enthalten, dessen Länge dem maximalen Abstand zwischen der Meeresoberfläche und dem Turmkopf entspricht. Das Erdungsseil wird im Gefahrenfall, bei Unwetter mit einem Ende zur Meeresoberfläche herabgelassen. Damit sind über das Erdungsseil mögliche Blitzeinschläge in die Windenergieanlage oder in die Rettungskapsel in das Meer ableitbar.

In einer weiteren bevorzugten Ausführungsform der Erfindung ist das Rettungsmittel als Korb kostengünstig ausgebildet. Der Korb ist schwimmfähig.

Die oben beschriebenen Rettungsmittel enthalten vorzugsweise Schwimmwesten, Überlebensanzüge, eine Notration und Verbandsmaterial. Ebenso können dort Signaleinrichtungen, wie Leuchtraketen oder Notsignalsender, als auch ein Paddel vorhanden sein. Darüber hinaus kann ein Wurfseil zum Einholen des auf dem Meer treibenden Rettungsmittels vorgesehen sein.

Vorzugsweise ist der Hinunterlassvorrichtung eine Dämpfungsvorrichtung zugeordnet, mit der ein Fall des Rettungsmittels in ein Wellental, nach dem Aufsetzen auf einem Wellenberg, dämpfbar ist. Durch die Dämpfungsvorrichtung wird die Gefahr von Verletzungen des Servicepersonals beim Übergang vom Abseilen zum Treiben auf dem Meer vermindert.

In einer weiteren bevorzugten Ausführungsform der Erfindung ist das Rettungsmittel durch eine Ausklinkvorrichtung aus der Herunterlassvorrichtung, insbesondere dem Seil, ausklinkbar, wenn es die Meeresoberfläche erreicht hat. Das ausgeklinkte Rettungsmittel kann so aus der Gefahrenzone unter der Windenergieanlage wegtreiben oder mit Hilfe eines am Rettungsmittel vorgesehenen Motors aus der Gefahrenzone fahren.

Die Aufgabe wird in einem weiteren Aspekt durch die Merkmale des Anspruchs 5 gelöst. In dieser Ausbildung der Erfindung ist das Rettungsmittel Teil einer Befahrvorrichtung zu Wartungszwecken für die Windenergieanlage. Eine Heraufziehvorrichtung weist dazu vorzugsweise einen Antrieb auf. Hinunterlass- und Heraufziehvorrichtung ermöglichen es, das Rettungsmittel hinunter zu lassen, vorzugsweise abzuseilen, und wieder zur Betriebsmittelplattform herauf zu ziehen. Das hinuntergelassene und z.B. auf dem Schiffsdeck des Serviceschiffes kurzfristig abgesetzte Rettungsmittel wird einschließlich des zugestiegenen Servicepersonals mit dem Antrieb zum Turmkopf hochgezogen. Ein mühseliger Leiteraufstieg durch den Turm wird dem Servicepersonal somit erspart.

Das Rettungsmittel kann an unterschiedlichen Positionen an der Betriebsmittelplattform im Normalzustand angeordnet sein. Vorzugsweise ist es in der Betriebsmittelplattform, insbesondere dem Maschinenhaus, integriert und bietet so wenig Angriffsfläche für den Wind. Dabei können Außenwandungen des Rettungsmittels mit Außenwandungen der Betriebsmittelplattform fluchten. Das Rettungsmittel kann z.B. im Bereich der Rotornabe angebracht, vorzugsweise im Spinner integriert sein. In dieser Ausführungsform der Erfindung ist das Rettungsmittel auch zu Wartungsarbeiten der Rotorblätter einsetzbar. Dazu wird jeweils ein Rotorblatt senkrecht nach unten zur Meeresoberfläche gedreht. Zur Wartung wird das bemannte Rettungsmittel an dem Rotorblatt hinunter und herauf bewegt.

Das Rettungsmittel kann aber auch an einem meerseitig der Betriebsmittelplattform, insbesondere dem Maschinenhaus, angeordneten Gestänge eingehängt sein. Diese Position eignet sich zur Wartung der Turmaußenwandung. Dazu wird das bemannte Rettungsmittel am Turm hinunter und herauf bewegt. Mit Hilfe einer Windnachführeinrichtung kann so der Turm allseitig gewartet werden.

In einer weiteren Ausführungsform der Erfindung sind zwei Rettungsmittel vorhanden, günstigenfalls in den oben genannten Positionen, am Spinner und unterhalb des Maschinenhauses. Somit können sowohl die Rotorblätter, als auch die Turmaußenwandung gewartet werden.

Es ist auch möglich, das Rettungsmittel an einer seitlichen Verkleidung des Maschinenhauses oder an der dem Rotor abgewandten Seite der Verkleidung zu positionieren. Das Rettungsmittel kann insbesondere durch einen Schwenkarm aus seinem Normalzustand in einen Zustand gebracht werden, in dem es vom Servicepersonal bestiegen werden kann.

Günstigenfalls ist ein Antrieb der Heraufziehvorrichtung als fernsteuerbare Antriebswinde ausgebildet, mit einem Empfänger, die mittels eines auf einem Serviceschiff anordnerbaren Senders gesteuert werden kann. Wenn das Serviceschiff mit dem Servicepersonal auf dem Weg zur Windenergieanlage ist, kann mittels des Senders die Abseileinrichtung des im Turmkopf befindlichen Rettungsmittels angesteuert und herabgelassen werden. In besonders zeitsparender Weise wird das Rettungsmittel auf das Deck des Serviceschiffes abgeseilt, wo das Servicepersonal zusteigt. Dazu können am Boden des Rettungsmittels Dämpfungsmittel angeordnet sein, die das Stampfen des Serviceschiffes bei Seegang dämpfen.

Zur Erhöhung der Sicherheit, kann das Rettungsmittel mit dem Turmkopf über ein Lastseil und ein Sicherungsseil verbunden sein.

Damit das Rettungsmittel beim Hochziehen automatisch zur Ausbildung der direkten Verbindung zum Umstieg in der Maschinenhausverkleidung positioniert wird, weist das Rettungsmittel Leitprofile und der Turmkopf korrespondierende Leitprofile auf.

Vorzugsweise weist das Rettungsmittel einen Anschlagschutz auf. Insbesondere bei starkem Wind besteht die Gefahr, das Rettungsmittel schräg abzuseilen. Es kann auch zu Schaukelbewegungen des Rettungsmittels am Seil kommen. Der Anschlagschutz kann ein hartes Anschlagen des Rettungsmittels am Turm verhindern, dazu ist der Anschlagschutz als ein das Rettungsmittel umgebender Dämpfer, z.B. als Luftschlauch, der als Fender dient, ausgebildet. Es sind auch Abstandsbegrenzungsvorrichtungen zwischen Rettungsmittel und Turm denkbar.

Um insbesondere ein mehrmaliges Anschlagen am, oder ein Umwickeln des Turmes durch das am Seil herabgelassene Rettungsmittel zu verhindern, kann ein Leitseil vorgesehen sein, dessen eines Ende mit der Windenergieanlage verbunden ist und dessen anderes Ende ein Ankermittel aufweist, das in das Meer abseilbar ist. In einer Ausführungsform des Anschlagschutzes kann das eine Ende des Leitseils mit der Betriebsmittelplattform verbunden sein und das andere Ende einen Anker oder ein Gewicht aufweisen, das auf den Meeresboden abseilbar ist. Das Rettungsmittel ist hier am Leitseil zur Meeresoberfläche führbar.

In anderen Ausführungsformen des Anschlagschutzes ist das eine Ende des Leitseils mit dem Rettungsmittel verbunden. Das Ankermittel kann in kostengünstiger Weise als Treibanker ausgebildet sein, der das Rettungsmittel in eine Richtung, vorzugsweise vom Turm weg, zieht.

Es ist auch denkbar, das Ankermittel als mehrere, entlang des Leitseils angeordnete Einzelgewichte auszubilden, die während des Abseilens des Rettungsmittels nacheinander auf den Meeresboden gelangen. Die Einzelgewichte können an dem Leitseil voneinander beabstandet fixiert sein. Die Länge des Leitseils entspricht der maximalen Höhe des Rettungsmittels über der Meeresoberfläche, zuzüglich der Meerestiefe im Bereich der Windkraftanlage. Während das Leitseil zum Meeresboden gelassen wird, wird es durch die nacheinander dort auftreffenden Einzelgewichte immer wieder neu verankert.

Vorzugsweise werden die Einzelgewichte aber nacheinander abgeseilt. Dadurch wird erreicht, dass die Einzelgewichte während des Abseilens des Rettungsmittels nur kurzzeitig dem möglicherweise herrschenden Wind ausgesetzt sind, der sie gegen den Turm drücken könnte. Jedes Einzelgewicht weist dazu vorzugsweise eine Bohrung zum Durchführen des Leitseils auf mit einem Innendurchmesser, der größer als der Innendurchmesser einer Bohrung eines später abzuseilenden Einzelgewichts ist. Ausgehend vom Rettungsmittel sind Haltemittel mit zunehmendem Außendurchmesser am Leitseil voneinander beabstandet fixiert. Jedes Einzelgewicht ist einem Haltemittel zugeordnet, indem sein Innendurchmesser etwas kleiner als der Außendurchmesser des ihm zugeordneten Haltemittels ist, aber größer als der Außendurchmesser der dichteren Halteelemente ist. Somit rutscht das zuerst abgeseilte Einzelgewicht mit dem größten Innendurchmesser über alle Haltemittel, und es kommt erst auf dem am weitest entfernten Haltemittel zum Stillstand, und das als nächstes abgeseilte Einzelgewicht, mit dem zweitgrößten Innendurchmesser, kommt auf dem zweit weitest entfernten Haltemittel zum Stillstand usw.

In einer besonders bevorzugten Ausführungsform der Erfindung ist das Rettungsmittel im heraufgezogenen Zustand in die Verkleidung des Maschinenhauses integriert, beispielsweise, indem die Außenwandung des Rettungsmittels mit der Verkleidung des Maschinenhauses fluchtet. Durch den fluchtenden Übergang entsteht eine glatte Wandung des Maschinenhauses, an die der Wind nicht angreifen kann, wodurch ein Umstieg ohne Schwankungen und somit gefahrlos erfolgen kann.

Die Aufgabe wird auch durch ein Verfahren zur Rettung von Servicepersonal im Gefahrenfall von einer Windenergieanlage für den off-shore Einsatz mit einer an einem Turm oberhalb einer Meeresoberfläche angeordneten Betriebsmittelplattform gelöst, indem Servicepersonal mit einem Beförderungsmittel zur Windenergieanlage befördert wird und das Servicepersonal im Gefahrenfall von der Betriebsmittelplattform in wenigstens ein Rettungsmittel steigt, das vor dem Gefahrenfall, wenn kein Servicepersonal bei der Windenergieanlage ist, mit der Windenergieanlage in Verbindung steht und das Servicepersonal mit dem Rettungsmittel in Richtung Meeresoberfläche transportiert wird.

Vorzugsweise steigt das Servicepersonal im Gefahrenfall direkt aus dem Innenraum der Windenergieanlage in das Rettungsmittel.

Die Erfindung wird anhand von Ausführungsbeispielen in sieben Figuren beschrieben. Dabei zeigen:
- Fig. 1: eine Perspektivische Ansicht einer erfindungsgemäßen Windenergieanlage mit teilweise abgeseilter Rettungskapsel,
- Fig. 2: eine perspektivische Ansicht des leeseitigen Teils des Maschinenhauses in Fig. 1 mit eingezogener Rettungskapsel,
- Fig. 3: eine Ansicht gemäß Fig. 2 mit teilweise abgeseilter Rettungskapsel,
- Fig. 4: eine Ansicht des Maschinenhauses gemäß Fig. 3 von Achtern mit Rettungskapsel,
- Fig. 5: eine perspektivische Ansicht der erfindungsgemäßen Rettungskapsel,
- Fig. 6: eine perspektivische Ansicht eines Maschinenhauses in einer zweiten Ausführungsform,
- Fig. 7: eine perspektivische Ansicht eines Maschinenhauses in einer dritten Ausführungsform.

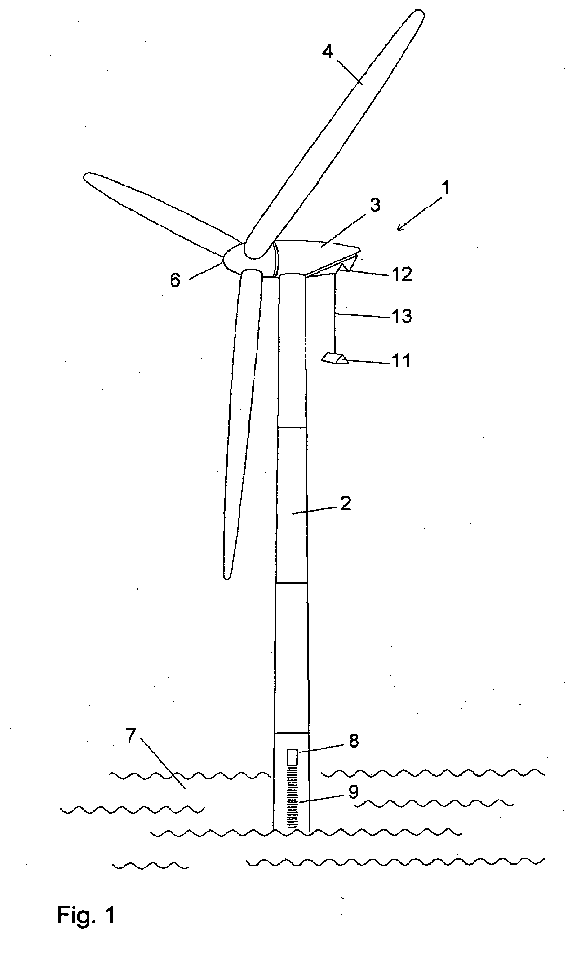

Die in Fig. 1 dargestellte Windenergieanlage 1 ist für den off-shore Einsatz bestimmt. Die Windenergieanlage 1 weist einen Turm 2 und ein auf dem Turm 2 angeordnetes Maschinenhaus 3 auf, das um eine Längsrichtung des Turmes 2 in den Wind drehbar ist. An einem luvseitigen Ende des Maschinenhauses 3 ist ein drei paarweise in einem Winkel von 120° zueinander angeordnete Rotorblätter 4 aufweisender Rotor 6 drehbar gelagert. Die Windenergieanlage 1 weist einen im Meeresboden verankerten Turmfuß (nicht eingezeichnet) auf. Oberhalb einer Meeresoberfläche 7 ist eine Servicetür 8 im Turm 2 angeordnet, durch die mit dem Serviceschiff angelandetes Servicepersonal die Windenergieanlage 1 zu Wartungs- und Reparaturarbeiten begehen kann. Dafür ist zwischen Servicetür 8 und Maschinenhaus 3 eine Leiter im Inneren des Turms 2 vorgesehen. Von der Meeresoberfläche 7 zur Servicetür 8 verläuft eine Stiegleiter 9. Die Servicetür 8 ist im Turm 2 deutlich oberhalb eines Hochwassermeeresspiegels angeordnet, damit sie auch dem Wellengang bei rauer See nicht ausgesetzt ist. Eine unterste Stiege der Stiegleiter 9 ist auf Höhe des Niedrigwassermeeresspiegels außen am Turm 2 befestigt.

Im Turm 2, dort oberhalb des Hochwassermeeresspiegels oder im Maschinenhaus 3 können Transformatoren untergebracht sein, deren Hochspannungen bei Defekten Brände verursachen können. Im Brandfall kann sich das im Turm 2 oder Maschinenhaus 3 gefangene Servicepersonal in einer aus dem Maschinenhaus 3 abseilbaren Rettungskapsel 11 in Sicherheit bringen. Dazu weist eine rotorabseitige, im Betrieb also leeseitige Verkleidung des Maschinenhauses in einem unteren, der Meeresoberfläche 7 zugewandten Bereich, eine Aussparung 12 auf. In die Aussparung 12 ist die Rettungskapsel 11 im Wesentlichen formschlüssig aufnehmbar. Das Maschinenhaus 3 weist in der Aussparung 12 eine Öffnung (nicht eingezeichnet) auf, durch die ein Zugriff auf eine Kapseltür der Rettungskapsel 11 ermöglicht wird. Somit kann das Servicepersonal im Brandfall durch die Öffnung greifen, die Kapseltür öffnen und aus dem Maschinenhaus 3 in die Rettungskapsel 11 umsteigen. Die Rettungskapsel 11 ist mit dem Maschinenhaus 3 durch ein Halteseil 13 verbunden, das von einer oberhalb der Rettungskapsel 11 angeordneten Seilwinde abrollbar ist. Im Brandfall kann das in die Rettungskapsel 11 umgestiegene Servicepersonal in der Rettungskapsel 11 einen Arretiermechanismus lösen, damit die Rettungskapsel 11 dann an dem sich gebremst abrollenden Halteseil 13 zur Meeresoberfläche 7 abseilt.

Darüber hinaus ist an der Seilwinde eine Bremse, insbesondere eine Fliehkraftbremse (nicht eingezeichnet), vorgesehen. Die Bremse gestattet es, die Abseilgeschwindigkeit zu steuern, so dass sie eine gesundheitsschädliche Höchstgeschwindigkeit beim Auftreffen auf die Meeresoberfläche 7 nicht überschreitet. Die Bremse ermöglicht es auch, die Kabine kurz über der Meeresoberfläche 7 zu stoppen. In dieser Schwebeposition der Rettungskapsel 11 kann das Servicepersonal auf alarmierte Hilfe warten. Üblicherweise wird die Rettungskapsel 11 im Brandfall jedoch bis zur Meeresoberfläche 7 abgeseilt. Das Halteseil 13 ist in die Rettungskapsel 11 eingeklinkt. Die auf dem Meer treibende Rettungskapsel 11 kann vom Servicepersonal vom Halteseil 13 ausgeklinkt werden. Die besetzte Rettungskabine 11 ist schwimmfähig und mit Rettungswesten, Verbandsmaterial, Notproviant und Überlebensanzügen ausgestattet, so dass das Servicepersonal auch im Winter, bei niedrigen Außentemperaturen und rauer See, hinreichend lange in der Rettungskapsel aushalten kann.

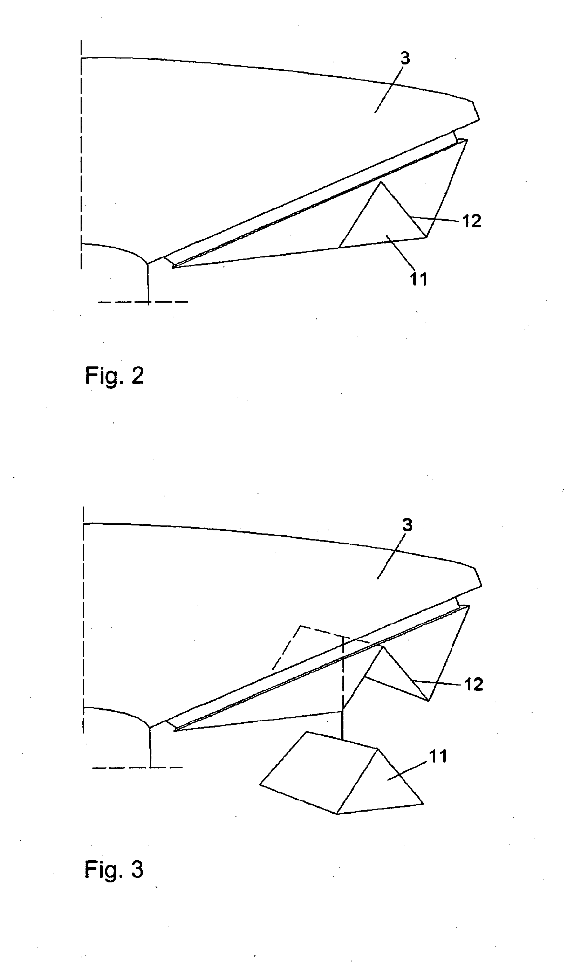

Fig. 2 zeigt den hinteren, d. h. dem Rotor abgewandten Bereich des Maschinenhauses 3. In der in Fig. 2 unteren, d. h. der Meeresoberfläche zugewandten Seite der Verkleidung des Maschinenhauses 3 ist eine Aussparung 12 vorgesehen. Die Aussparung 12 nimmt die eingezogene Rettungskapsel 11 formschlüssig auf. Die eingezogene Rettungskapsel 11 ist in das äußere Design des Maschinenhauses integriert und bietet damit auch einen ästhetisch ansprechenden Anblick.

In Fig. 3 ist der Beginn des Abseilvorgangs der Rettungskapsel 11 in Fig. 2 dargestellt. Die Rettungskapsel 11 ist etwas aus der Aussparung 12 der Verkleidung des Maschinenhauses 3 herausgelöst. Die Rettungskapsel 11 ist in einem Querschnitt dreieckig ausgebildet.

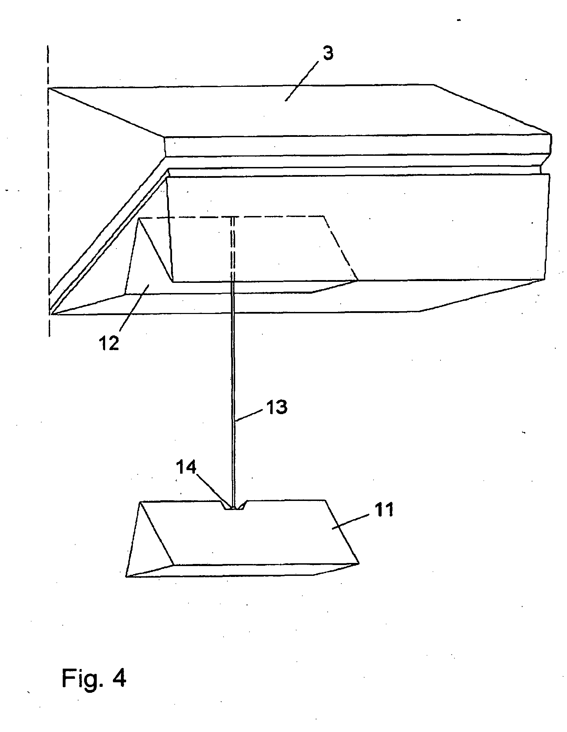

In der Ansicht gemäß Fig. 4 eines Teils des Maschinenhauses 3 ist die aus der Aussparung 12 heraus gelöste Rettungskapsel 11 in ihrer insgesamt zeltförmigen Ausformung gezeigt. Am Dachfirst ist eine Rolle 14, von der das Seil abrollt, angeordnet. An der Rolle 14 ist eine (nicht eingezeichnete) Bremse vorgesehen.

Alternativ kann die Seilrolle auch innerhalb der Rettungskapsel 11 oder am Maschinenhaus 3 befestigt sein

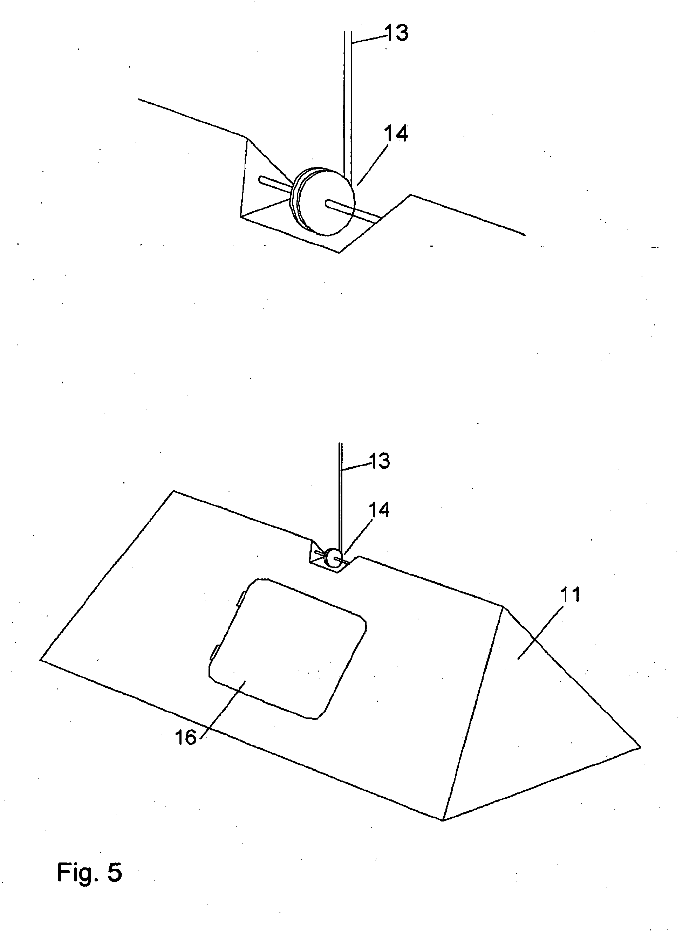

Die in Fig. 5 dargestellte Rettungskapsel 11 weist in einer Dachwandung eine Kapseltür 16 auf. Im Gefahrenfall greift das Servicepersonal durch eine in der Aussparung 12 vorgesehene Ausstiegsöffnung und öffnet die Kapseltür 11. Über die Kapseltür 16 kann das Servicepersonal in die Rettungskapsel 11 einsteigen, dann die Kapseltür 16 von innen verschließen und nach dem Abseilen auf der Meeresoberfläche vor Witterungseinflüssen geschützt treiben. Ausstiegsöffnung und Kapseltür stellen im Gefahrenfall eine direkte Verbindung zwischen Innenraum des Maschinenhauses und Innenraum der Rettungskapsel 11 dar. Die Rettungskapsel 11 in Fig. 5 ist während des Abseilens dargestellt.

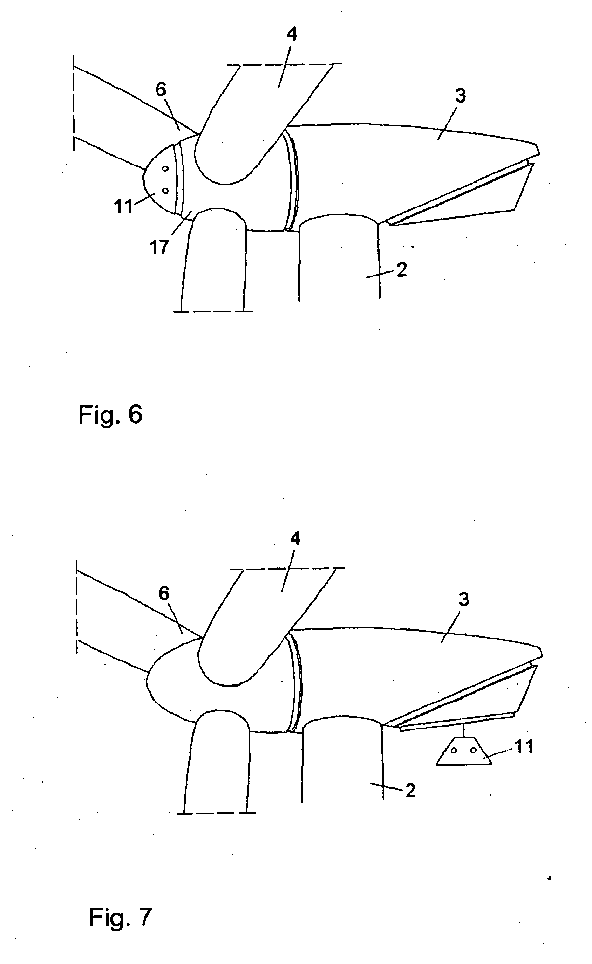

Fig. 6 zeigt die Rettungskapsel 11 in einer in den Spinner des Rotors 6 integrierten Form. Im Brandfall muss das Servicepersonal, welches sich z.B. zu Wartungsarbeiten in der Rotornabe 17 aufhält, in den Spinner steigen, um in die Rettungskapsel 11 zu gelangen.

In der dritten Ausführungsform gemäß Fig. 7 ist eine Rettungskapsel 11 gezeigt, die in der Normalposition unterhalb des Maschinenhauses 3 angeordnet ist. Unterhalb des Maschinenhauses 3 ist ein Schienenprofil 18 vorgesehen, an dem die Rettungskapsel 11 in der Normalposition hängt. Der dem Maschinenhaus 3 zugewandte Bereich der Rettungskapsel 11 ist abgeflacht. In dem abgeflachten Bereich ist die Kapseltür vorgesehen. Das Servicepersonal kann durch die Kapseltür vom Maschinenhaus 3 in die Rettungskapsel 11 einsteigen. Danach wird die Rettungskapsel 11 abgeseilt.

### Bezugszeichenliste:

- 1.: Windenergieanlage
- 2.: Turm
- 3.: Maschinenhaus
- 4.: Rotorblätter
- 5.: -
- 6.: Rotor
- 7.: Meeresoberfläche
- 8.: Servicetür
- 9.: Stiegleiter
- 10.: -
- 11.: Rettungskapsel
- 12.: Aussparung
- 13.: Halteseil
- 14.: Ein- / Ausklinkmechanismus
- 15.: -
- 16.: Rettungskapseltür
- 17.: Rotornabe
- 18.: Schienenprofil

## Patentansprüche

1. Windenergieanlage für den off-shore Einsatz mit:
einer an einem Turm (2) oberhalb einer Meeresoberfläche (7) angeordneten Betriebsmittelplattform (3, 6), **gekennzeichnet durch** wenigstens ein als Rettungskapsel, Rettungsinsel oder Rettungskorb ausgeführtes Rettungsmittel (11) für sich auf der Betriebsmittelplattform (3, 6) aufhaltendem Servicepersonal, das in einem Gefahrenfall für einen Transport des Servicepersonals zur Meeresoberfläche (7) bestimmt ist und das vor dem Gefahrenfall, wenn kein Servicepersonal bei der Windenergieanlage ist, an der Windenergieanlage angeordnet und bis zum Gefahrenfall **durch** mechanische Verbindung ständiger Bestandteil der Windenergieanlage ist.

2. Windenergieanlage nach Anspruch 1,
**gekennzeichnet durch** einen Wartungszugang (8) für **durch** ein Beförderungsmittel zur Windenergieanlage befördertem Servicepersonal und **dadurch**, dass das Beförderungsmittel vom Rettungsmittel (11) getrennt ausgebildet ist.

3. Windenergieanlage nach Anspruch 1 oder 2,
**gekennzeichnet durch** eine direkte, einen Umstieg des Servicepersonals gestattende Verbindung (11, 12, 16) zwischen einem Innenraum der Betriebsmittelplattform (3, 6) und dem Rettungsmittel (11).

4. Windenergieanlage nach Anspruch 1, 2 oder 3,
**gekennzeichnet durch** eine Hinunterlassvorrichtung (13) für das Rettungsmittel (11), mit der das Rettungsmittel (11) entlang des Turms (2) transportierbar ist.

5. Windenergieanlage nach wenigstens einem der vorstehenden Ansprüche,
**gekennzeichnet durch** eine Heraufziehvorrichtung (13) für das Rettungsmittel (11), mit der das herabgelassene Rettungsmittel (11) zur Betriebsmittelplattform (3, 6) hochziehbar ist.

6. Windenergieanlage nach wenigstens einem der vorstehenden Ansprüche,
**dadurch gekennzeichnet, dass** das Rettungsmittel (11) vor dem Gefahrenfall in die Betriebsmittelplattform (3, 6) integriert ist.

7. Windenergieanlage nach wenigstens einem der vorstehenden Ansprüche,
**dadurch gekennzeichnet, dass** das Rettungsmittel (11) im Bereich einer Rotornabe (17) angeordnet ist.

8. Windenergieanlage nach wenigstens einem der vorstehenden Ansprüche,
**dadurch gekennzeichnet, dass** das Rettungsmittel (11) eine schwimmfähige Rettungskapsel aufweist.

9. Verfahren zur Rettung von Servicepersonal im Gefahrenfall von einer Windenergieanlage für den off-shore Einsatz, insbesondere nach wenigstens einem der Ansprüche 1 bis 8, mit einer an einem Turm (2) oberhalb einer Meeresoberfläche (7) angeordneten Betriebsmittelplattform (3, 6),
indem Servicepersonal mit einem Beförderungsmittel zur Windenergieanlage befördert wird und
das Servicepersonal im Gefahrenfall von der Betriebsmittelplattform (3, 6) in wenigstens ein vom Beförderungsmittel getrenntes als Rettungskapsel, Rettungsinsel oder Rettungskorb ausgeführtes Rettungsmittel (11) steigt, das vor dem Gefahrenfall, wenn kein Servicepersonal bei der Windenergieanlage ist, an der Windenergieanlage angeordnet und bis zum Gefahrenfall durch mechanische Verbindung ständiger Bestandteil der Windenergieanlage ist, und
das Servicepersonal mit dem Rettungsmittel (11) zur Meeresoberfläche (7) transportiert wird.

10. Verfahren nach Anspruch 9,
**dadurch gekennzeichnet, dass** das Servicepersonal im Gefahrenfall direkt aus einem Innenraum der Betriebsmittelplattform (3, 6) in das Rettungsmittel (11) umsteigt.

## Claims

1. A wind energy plant for offshore use with:
an equipment platform (3, 6) arranged on a tower (2) above a surface (7) of the sea, **characterized by** at least one rescue means (11) designed in the form of a rescue capsule, a life raft or a rescue basket for service staff working on the equipment platform (3, 6), which rescue means (11) is intended for conveying the service staff to the surface (7) of the sea in event of a dangerous situation and prior to the dangerous situation, if no service staff are present at the wind energy plant, is arranged on the wind energy plant and is a permanent component of the wind energy plant by a mechanical connection until the dangerous situation.

2. A wind energy plant according to Claim 1, **characterized by** a service access (8) for service staff conveyed by a means of transport to the wind energy plant, and in that the means of transport is designed to be separate from the rescue means (11).

3. A wind energy plant according to Claim 1 or 2, **characterized by** a direct connection (11, 12, 16) - allowing a change-over by the service staff - between an interior space of the equipment platform (3, 6) and the rescue means (11).

4. A wind energy plant according to Claim 1, 2 or 3, **characterized by** a lowering apparatus (13) for the rescue means (11) by which the rescue means (11) is capable of being conveyed along the tower (2).

5. A wind energy plant according to at least one of the preceding Claims, **characterized by** a raising apparatus (13) for the rescue means (11) by which the lowered rescue means (11) is capable of being raised to the equipment platform (3, 6).

6. A wind energy plant according to at least one of the preceding Claims, **characterized in that** the rescue means (11) is integrated in the equipment platform (3, 6) prior to the dangerous situation.

7. A wind energy plant according to at least one of the preceding Claims, **characterized in that** the rescue means (11) is arranged in the region of a rotor hub (17).

8. A wind energy plant according to at least one of the preceding Claims, **characterized in that** the rescue means (11) has a rescue capsule capable of floating.

9. A method of rescuing service staff in the event of a dangerous situation from a wind energy plant for offshore use, in particular according to at least one of Claims 1 to 8, with an equipment platform (3, 6) arranged on a tower (2) above a surface (7) of the sea,
in that service staff are conveyed by a means of transport to the wind energy plant, and
in the dangerous situation the service staff will climb from the equipment platform (3, 6) into at least one rescue means (11) which is separate from the means of transport and is designed in the form of a rescue capsule, a life raft or a rescue basket and prior to the dangerous situation, if no service staff are present at the wind energy plant, is arranged on the wind energy plant and is a permanent component of the wind energy plant by a mechanical connection until the dangerous situation, and
the service staff are conveyed to the surface of the sea by the rescue means (11).

10. A method according to Claim 9, **characterized in that** in the dangerous situation the service staff will climb directly out of an interior space of the equipment platform (3, 6) into the rescue means (11).

## Revendications

1. Eolienne pour l'utilisation offshore avec une plateforme d'équipements (3, 6) placée sur une tour (2) au-dessus d'une surface de la mer (7), **caractérisée par** au moins un moyen de sauvetage (11), conçu comme une capsule de sauvetage, un radeau de sauvetage ou une nacelle de sauvetage pour le personnel de service qui séjourne sur la plateforme d'équipements (3, 6), qui est destiné, en cas de danger, à un transport du personnel de service vers la surface de la mer (7) et qui est placé sur l'éolienne, avant que le cas de danger intervienne lorsqu'il n'y a pas de personnel de service sur l'éolienne et qui, jusqu'à ce que le cas de danger intervienne, est un composant permanent de l'éolienne grâce à une jonction mécanique.

2. Eolienne selon la revendication 1, **caractérisée par** un accès de maintenance (8) pour le personnel de service transporté vers l'éolienne par un moyen de transport et par le fait que le moyen de transport est configuré en étant séparé du moyen de sauvetage (11).

3. Eolienne selon la revendication 1 ou 2, **caractérisée par** une jonction directe (11, 12, 16), qui permet un transfert du personnel de service, entre un espace intérieur de la plateforme d'équipements (3, 6) et le moyen de sauvetage.

4. Eolienne selon la revendication 1, 2 ou 3, **caractérisée par** un dispositif de descente (13) pour le moyen de sauvetage (11) avec lequel le moyen de sauvetage (11) peut être transporté le long de la tour (2).

5. Eolienne selon au moins l'une des revendications précédentes, **caractérisée par** un dispositif de traction vers le haut (13) pour le moyen de sauvetage (11) avec lequel le moyen de sauvetage qui a été descendu (11) peut être tiré vers le haut vers la plateforme d'équipements (3, 6).

6. Eolienne selon au moins l'une des revendications précédentes, **caractérisée en ce qu'**avant que le cas de danger intervienne le moyen de sauvetage (11) est intégré à la plateforme d'équipements (3, 6).

7. Eolienne selon au moins l'une des revendications précédentes, **caractérisée en ce que** le moyen de sauvetage (11) est placé dans la zone d'un moyeu du rotor (17).

8. Eolienne selon au moins l'une des revendications précédentes, **caractérisée en ce que** le moyen de sauvetage (11) présente une capsule de sauvetage flottante.

9. Procédé pour le sauvetage de personnel de service en cas de danger d'une éolienne pour l'utilisation offshore, en particulier selon au moins l'une des revendications 1 à 8, avec une plateforme d'équipements (3, 6) placée sur une tour (2) au-dessus d'une surface de la mer (7), le personnel de service étant transporté vers l'éolienne avec un moyen de transport et le personnel de service montant, en cas de danger de la plateforme d'équipements (3, 6) dans au moins un moyen de sauvetage (11) séparé du moyen de transport et conçu comme une capsule de sauvetage, un radeau de sauvetage ou une nacelle de sauvetage, qui est placé sur l'éolienne, avant que le cas de danger intervienne lorsqu'il n'y a pas de personnel de service sur l'éolienne et qui, jusqu'à ce que le cas de danger intervienne, est un composant permanent de l'éolienne grâce à une jonction mécanique et qui transporte le personnel de service avec le moyen de sauvetage (11) vers la surface de la mer (7).

10. Procédé selon la revendication 9, **caractérisé en ce que** le personnel de service, en cas de danger, change directement d'un espace intérieur de la plateforme d'équipements (3, 6) au moyen de sauvetage (11).
